# EUROPÄISCHE PATENTSCHRIFT

(11) **EP 0 565 873 B1**
(45) Veröffentlichungstag und Bekanntmachung des Hinweises auf die Patenterteilung: **27.09.1995**
(21) Anmeldenummer: 93104100.8
(22) Anmeldetag: 13.03.1993
(51) Int. Cl.: B01D 29/11, B30B 9/12, E03F 5/14, C02F 11/12

(54) **Vorrichtung zum Verdichten und Waschen von verunreinigtem Rechen- oder Siebgut, insbesondere in Kläranlagen**
Device for compressing and washing of polluted solid matter, especially in purification plants
Dispositif pour le compactage et le lavage de produits solides, notamment dans des stations d'épuration

(30) Priorität: 07.04.1992 DE 4211657
(43) Veröffentlichungstag der Anmeldung: 20.10.1993
(73) Patentinhaber: Hans Huber GmbH Maschinen- und Anlagenbau, D-92334 Berching (DE)
(72) Erfinder: Huber, Hans Georg, W-8434 Berching (DE); Neger, Anton, W-8432 Beilngries (DE)
(74) Vertreter: Rehberg, Elmar, Dipl.-Ing.

(56) Entgegenhaltungen:
- WO-A-88/06090
- DE-A- 3 715 019
- DE-A- 4 042 167
- DE-U- 9 109 180

## Beschreibung

Die Erfindung bezieht sich auf eine Vorrichtung zum Verdichten und waschen von verunreinigtem Rechen- oder Siebgut, insbesondere in Kläranlagen, mit einer Schneckenfördereinrichtung, die ein Gehäuse mit Einwurftrichter, eine darin horizontal gelagerte und mit einem Antrieb versehene Welle und eine auf der Welle angeordnete Förderwendel aufweist, mit einer Waschzone und darin angeordneten Waschdüsen für die Zufuhr von Waschwasser sowie vor und nach der Waschzone angeordneten Preßzonen, die förderwendelfrei ausgebildet sind. Diese Vorrichtung dient in erster Linie dazu, im Bereich von Kläranlagen das mit Fäkalien verunreinigte Rechen- oder Siebgut zu waschen, also das Rechengut zu säubern und die organischen Bestandteile möglichst in den Abwasserkreislauf zurückzuführen.

Eine Vorrichtung der eingangs beschriebenen Art ist aus dem DE-U 91 09 180 bekannt. Im Bereich einer Scheckenfördereinrichtung mit horizontal, also liegend angeordneter Welle wird das Rechengut, welches mit einer anderen Einrichtung abgeschieden worden ist, über einen Einwurftrichter der Schneckenfördereinrichtung zugeführt. Es gelangt in eine Vorpreßzone, die zwischen Einwurftrichter und Waschzone vorgesehen ist. In der Vorpreßzone ist die Welle förderwendelfrei ausgebildet, so daß hier das Rechengut den gesamten Querschnitt der Fördereinrichtung ausfüllt und verdichtet wird. In der anschließenden Misch- und Waschzone besitzt die Welle der Schneckenfördereinrichtung keine Förderwendel, sondern es sind mehrere axial und in Umfangsrichtung verteilt auf der Welle angeordnete Mischflügel vorgesehen, die angenähert den gesamten freien Querschnitt des Gehäuses bestreichen. Die Mischflügel können mit Steigung auf der Welle der Schneckenfördereinrichtung angebracht sein. Sie können als Segmentabschnitte ausgeführt sein. Der Misch- und Waschzone ist ein ansteigend ausgebildetes Austragsrohr nachgeschaltet, so daß hier eine zweite Preßzone gebildet wird. Die Wandung des Gehäuses der gesamten Schneckenfördereinrichtung ist im unteren Bereich mit Durchbrechungen versehen, durch die das Waschwasser abgeführt wird. Der aus dem Rechengut bestehende, in der Vorpreßzone gebildete Pfropfen wird in der Misch- und Waschzone durch die Mischflügel zerkleinert und zerrieben, wobei die darin enthaltenen löslichen, organisch abbaubaren Bestandteile durch das Waschwasser ausgewaschen werden. Nachteilig hieran ist die Zerkleinerung des Rechenguts und der ungenügende Auswaschgrad, da das Waschwasser durch die Durchbrechungen in der Wandung des Gehäuses ungehindert austritt, so daß sich ein nennenswerter Wasserstand nicht aufbauen kann. Die Verwendung von mehr oder weniger radial von der Welle abstehenden Mischflügeln beinhaltet die Gefahr, daß sich Rechengut an diesen Flügeln anlagern und festsetzen kann. Insbesondere bei vermehrtem Rechengutanfall, der über die Schneckenfördereinrichtung und durch die erste Preßzone zwangsweise hindurchgeführt wird, ergibt sich die Möglichkeit, daß sich die Waschzone zusetzt. Betriebsunterbrechungen sind damit die Folge.

Die DE-A 37 15 019 zeigt eine Vorrichtung zur Trennung von Feststoffen aus Flüssigkeiten, insbesondere zur Abscheidung aus Fäkalienschlamm. Das Rechengut mit den anhaftenden Fäkalien, welches mit einer anderen Vorrichtung abgeschieden worden ist, wird der Trennvorrichtung zugeführt, die als Schneckenfördereinrichtung mit schrägstehend angeordneter Achse ausgebildet ist. Die angetriebene Welle weist eine durchgehende Förderwendel auf, zwischen deren Rand und der Innenwandung des Gehäuses ein Spalt gebildet ist. Im Mittelbereich der axialen Länge des Gehäuses sind Waschdüsen vorgesehen, mit deren Hilfe Waschwasser in den Innenraum der Vorrichtung geleitet wird. Je nach der Menge des anfallenden Rechenguts wird der zwischen der Förderwendel und dem Gehäuse gebildete Spalt mehr oder weniger abgeschlossen, so daß das Rechengut im Bereich jeder Förderwendel von Waschwasser eingeschlossen ist und die Spritzdüsen auf die Oberfläche des Wassers spritzen, so daß der Auswascheffekt entsprechend gering ist.

Aus der DE-A 40 42 167 ist eine Vorrichtung zur Entnahme von Rechengut aus in einem Gerinne strömender Flüssigkeit einer Kläranlage bekannt, bei der der Abscheideeinrichtung nachgeordnet eine Waschzone verwirklicht ist. Die sich durch die Abscheideeinrichtung und die Waschzone hindurch erstreckende Schneckenfördereinrichtung ist mit schrägstehender Achse angeordnet. Die Welle der Schneckenfördereinrichtung trägt eine Förderwendel, die sich durch die Waschzone hindurch erstreckt und lediglich vor der Kompaktierzone endet. Im Bereich der Waschzone sind Waschdüsen über die axiale Länge sowie auch über den Umfang verteilt angeordnet, so daß mit diesen Waschdüsen Waschwasser auf das verunreinigte Rechengut gespritzt werden kann. Durch die Waschzone ziehen sich Scher- und Förderleisten, die am inneren Umfang der Wandung des Gehäuses ortsfest angeordnet sind, so daß sich zwischen den Rand der Förderwendel und dem Gehäuse entsprechende Durchtrittskanäle für die Abfuhr des Waschwassers ergeben. Ein nennenswerter Wasserstand kann sich hier in der Waschzone nicht aufbauen, sondern der wesentliche Wascheffekt wird durch das Aufspritzen von Waschwasser auf das Rechengut und die entsprechende Misch- und Umschichtbewegung am Rechengut erreicht, die durch den Fördereffekt der Schneckenfördereinrichtung bereitgestellt wird.

Der Erfindung liegt die Aufgabe zugrunde, den Auswaschgrad des Rechenguts zu verbessern, also mehr Verunreinigungen aus dem Rechen- oder Siebgut herauszuholen. Dabei kommt es darauf an, die zusammengeballten Fäkalien aufzubrechen und zu zerkleinern, um sie in den Kreislauf der Kläranlage zurückführen zu können und das Rechengut mit hohem Auswaschgrad, also weitgehend gesäubert mit einem insoweit verringerten Volumen zu gewinnen, damit es einer Entsorgung zugeführt werden kann.

Erfindungsgemäß wird dies bei der Vorrichtung der eingangs beschriebenen Art dadurch erreicht, daß die Waschzone in zwei aneinander anschließende Bereiche unterteilt ist, in denen jeweils ein definierter Wasserstand, der etwa 1/4 bis 1/3 der Höhe des Querschnitts des Gehäuses einnimmt, herrscht, daß im ersten Bereich der Waschzone die Waschdüsen sowohl oberhalb des Wasserstands als auch unterhalb des Wasserstands angeordnet sind, und daß im zweiten Bereich der Waschzone das Gehäuse der Schneckenfördereinrichtung mit seitlich angeordneten, den Wasserstand definierenden Durchbrechungen versehen ist. Die neue Vorrichtung baut auf einer Vorrichtung zum Verdichten und Waschen des Rechenguts auf und arbeitet mit horizontal ausgerichteter Achse bzw. Schneckenfördereinrichtung. Es wird eine Waschpresse geschaffen, die zwei voneinander abgegrenzte Bereiche im Bereich ihrer Waschzone aufweist. Im ersten Bereich der Waschzone geht es darum, eine intensive Durchwirbelung des verunreinigten Rechenguts zu erzielen, und zwar bei einem definierten Wasserstand, wobei sich die Durchwirbelung auf das Rechengut sowohl unterhalb der Wasserlinie wie auch oberhalb der Wasserlinie erstrecken soll. Zu diesem Zweck sind die Waschdüsen sowohl oberhalb wie auch unterhalb des Wasserstands angeordnet. Die oberhalb des Wasserstands angeordneten Waschdüsen spritzen auf die zugängliche Oberfläche des aufgewirbelten Rechenguts. Die unterhalb des Wasserstands angeordneten Waschdüsen sorgen für eine intensive Bewegung des Rechenguts in dem Wasser. In diesem ersten Bereich ist eine gewisse Entmischungswirkung angestrebt, indem die Fäkalien und das Rechengut voneinander getrennt werden sollen. Kleinere Partikel sollen dabei bereits von dem Rechengut abgelöst und größere Zusammenballungen von Fäkalien aufgebrochen und zerkleinert werden, ohne daß eine nennenswerte Zerkleinerung des Rechenguts selbst stattfindet. Zur Bewegung des Rechenguts und der Fäkalien trägt auch die Förderwendel bei, die sich durch den ersten Bereich der Waschzone hindurch erstreckt und darüberhinaus natürlich auch die entsprechende axiale Förderwirkung zu erbringen hat. Im ersten Bereich der Waschzone erfolgt ein intensives Auswaschen aufgrund der rotierenden Bewegung des Rechen- und Siebguts. An den ersten Bereich der Waschzone schließt sich der zweite Bereich an, in welchem ebenfalls mit einem definierten Wasserstand gearbeitet wird. Eine intensive Durchmischung des Wassers ist hier nicht mehr erforderlich. Es kommt vielmehr darauf an, ein großflächiges Auswaschen der gelösten und zerkleinerten Fäkalstoffe zu erreichen. Damit erhalten die oberhalb des Wasserstands angeordneten Waschdüsen ihre besondere Bedeutung. Durch im zweiten Bereich der Waschzone angeordnete Durchbrechungen des Gehäuses der Schneckenfördereinrichtung, die nicht an der tiefsten Stelle der Wandung des Gehäuses, sondern seitlich vorgesehen sind, wird der Wasserstand eingestellt. Dieser Wasserstand kann sich gleichzeitig auch im ersten Bereich der Waschzone auswirken. Nach der Waschzone ist dann ein Bereich vorgesehen, in welchem der Wasserstand erniedrigt und schließlich gänzlich beseitigt wird, damit die gelösten Fäkalstoffe hier abgeführt werden und nur das Rechengut in die anschließende Preßzone gelangt.

Der Waschzone kann eine Vorwaschzone vorgeschaltet sein, in der die Welle der Schneckenfördereinrichtung mit Misch- und Knetschaufeln besetzt ist. Die Vorwaschzone kann einen mindestens der halben Höhe des Querschnitts des Gehäuses entsprechenden Wasserstand aufweisen. Die Vorwaschzone bildet damit gleichsam eine Einweichzone für das verunreinigte Rechen- oder Siebgut. Die Misch- und Knetschaufeln werden mit gezielt niedriger Drehzahl der Schneckenfördereinrichtung angetrieben, um den Einweichvorgang zu unterstützen und das Rechengut schonend zu kneten und zu quetschen. Es wird hier bereits eine Zerkleinerung der festen Fäkalstoffe angestrebt, ohne daß das Rechengut zerkleinert werden soll. Der Wasserstand in der Vorwaschzone kann vorzugsweise höheneinstellbar ausgebildet sein, um auf das Ergebnis in der Vorwaschzone Einfluß zu nehmen. Es ist jedoch nicht beabsichtigt, eine mehr oder weniger trockene Umwälzung des Rechenguts durchzuführen. Auch im Bereich der Vorwaschzone sind Waschdüsen vorgesehen, die entlang einer Leiste angeordnet sein können. Die Waschdüsen sind oberhalb des Wasserstands angeordnet und in einer solchen Relativlage vorgesehen, daß sie auf die Oberfläche des Wasserstands und das dort teilweise herausschauende Rechengut spritzen. Damit findet bereits ein Ablösen der Fäkalstoffe in dieser Vorstufe statt. Die Anordnung der Waschdüsen oberhalb des Wasserstands und relativ zu den Misch- und Knetschaufeln bewirkt darüberhinaus eine kontinuierliche Reinigung der Misch- und Knetschaufeln von etwa anhaftendem Rechengut.

Die Vorwaschzone ist zweckmäßig vor der der Waschzone vorgeschalteten Preßzone vorgesehen und kann zumindest teilweise im Bereich des Einwurftrichters angeordnet sein. Damit wird Baulänge genutzt, die für die Unterbringung des Einwurftrichters ohnehin erforderlich ist und die Gesamtlänge der Vorrichtung vergrößert sich damit durch die Anordnung der Vorwaschzone nicht. Eine geschlossene Gehäusewandung ist im Bereich der Vorwaschzone nicht erforderlich.

Vorteilhaft können die Misch- und Knetschaufeln auf einem im Durchmesser verdickten Bereich der Welle der Schneckenfördereinrichtung angeordnet sein und eine der Drehrichtung entgegengesetzt abgebogene Formgebung aufweisen. Die Misch- und Knetschaufeln sind für einen schonenden Umwälz- und Knetvorgang ausgelegt und so gestaltet, daß sich möglichst an ihnen kein Rechengut ansetzt. Sie sind deshalb in ihrer Formgebung entgegengesetzt zur Drehrichtung umgebogen. Die Anordnung auf einem verdickten Bereich der Welle erleichtert die Formgebung und führt im übrigen dazu, daß die Knet- und Quetschwirkung begünstigt wird.

Das Gehäuse der Schneckenfördereinrichtung im ersten Bereich der Waschzone sollte zweckmäßig geschlossen ausgebildet sein, wobei eine geringfügige Abführung von Waschwasser nicht nachteilig ist. Es muß aber darauf geachtet werden, daß der definierte Wasserstand in diesem Bereich eingehalten wird. Der Wasserstand darf weder zu hoch noch zu niedrig sein. Aus diesem Grund empfiehlt es sich, den Wasserstand auch in diesem ersten Bereich einstellbar auszubilden. Es ist möglich, im ersten Bereich und im zweiten Bereich der Waschzone unterschiedliche Wasserstände zur Einwirkung zu bringen. In vereinfachter Ausführung ist der Wasserstand in beiden Bereichen gleich und wird durch Durchbrechungen im zweiten Bereich auch für den ersten Bereich festgelegt. Der zweite Bereich der Waschzone sollte zweckmäßig länger als der erste Bereich ausgebildet sein, wobei die Anordnung der Waschdüsen im ersten Bereich wiederum auf engerem Raum vorgesehen wird als im zweiten Bereich. Im ersten Bereich ist eine stärkere Durchwirbelung und Zerkleinerungswirkung für die Fäkalstoffe beabsichtigt, während im zweiten Bereich die Säuberungswirkung auf das Rechengut im Vordergrund steht.

Grundsätzlich ist es möglich, durch die gesamte Vorrichtung eine einzige Welle mit horizontaler Achse durchgehend anzuordnen. Aus Platzgründen kann es jedoch zweckmäßig sein, die Vorwaschzone einerseits und die Waschzone andererseits entlang zweier paralleler Wellen der Schneckenfördereinrichtung anzuordnen. Dabei ergibt sich noch der weitere Vorteil, daß auf beiden Wellen unterschiedliche Antriebe und/oder zumindest unterschiedliche Drehzahlen zur Einwirkung gebracht werden können. Es ist zweckmäßig, insbesondere die erste Welle mit niedrigerer Drehzahl als die zweite Welle anzutreiben und/oder unterschiedliche Steigungswinkel der Förderwendel im Bereich der beiden Wellen vorzusehen, damit an der ersten Welle die Förderwirkung langsamer abläuft als im Bereich der zweiten Welle mit der Waschzone. Im Bereich der ersten Welle kann auch die der Waschzone vorgeschaltete Preßzone untergebracht sein, unabhängig davon, daß im Bereich der zweiten Welle dann auch die der Waschzone nachgeschaltete zweite Preßzone vorgesehen ist.

Im Bereich der Innenwandung des Gehäuses sind im Bereich der Vorwaschzone wendelförmig angeordnete Misch- und Förderleisten vorgesehen, die die Förderwirkung auf das Rechengut erheblich unterstützen, obwohl sie ortsfest angeordnet sind. Diese Misch- und Förderleisten wirken mit den Misch- und Knetschaufeln der Vorwaschzone zusammen.

Vor der Waschzone und nach der vorgeschalteten Preßzone kann eine Einrichtung zum gezielten Aufbrechen des in der Preßzone verdichteten, vorgewaschenen Rechenguts vorgesehen sein. Diese Einrichtung zum Aufbrechen dient dazu, das vorgewaschene und vorverdichtete Rechengut mengenmäßig portioniert den beiden Bereichen der Waschzone zuzuleiten und das Rechengut mit den anhaftenden Fäkalien auch bei diesem Zuleiten bereits so aufzubrechen, daß es in der Waschzone und in den beiden Bereichen entsprechend behandelt werden kann. Vor der Preßzone und in der Waschzone, also durchgehend über breite Bereiche, sind Scher- und Förderleisten an der Innenwandung des Gehäuses befestigt. Diese Scher- und Förderleisten dienen der Sicherstellung der Förderwirkung und bilden gleichzeitig Kanäle für den Durchtritt und das Abfließen des Waschwassers gegen das Ende der Waschzone bzw. in Richtung auf die nachgeschalteten Durchbrechungen in der Wandung des Gehäuses.

Ein Ausführungsbeispiel der erfindungsgemäßen Vorrichtung ist in den Zeichnungen dargestellt und wird im Folgenden näher beschrieben. Es zeigen:
- Figur 1: eine Ansicht der Vorrichtung, teilweise geschnitten,
- Figur 2: einen Schnitt durch die Vorwaschzone gemäß der Linie II-II in Figur 1,
- Figur 3: einen Schnitt durch den ersten Bereich der Waschzone gemäß der Linie III-III in Figur 1 und
- Figur 4: einen Schnitt durch den zweiten Bereich der Waschzone gemäß der Linie IV-IV in Figur 1.

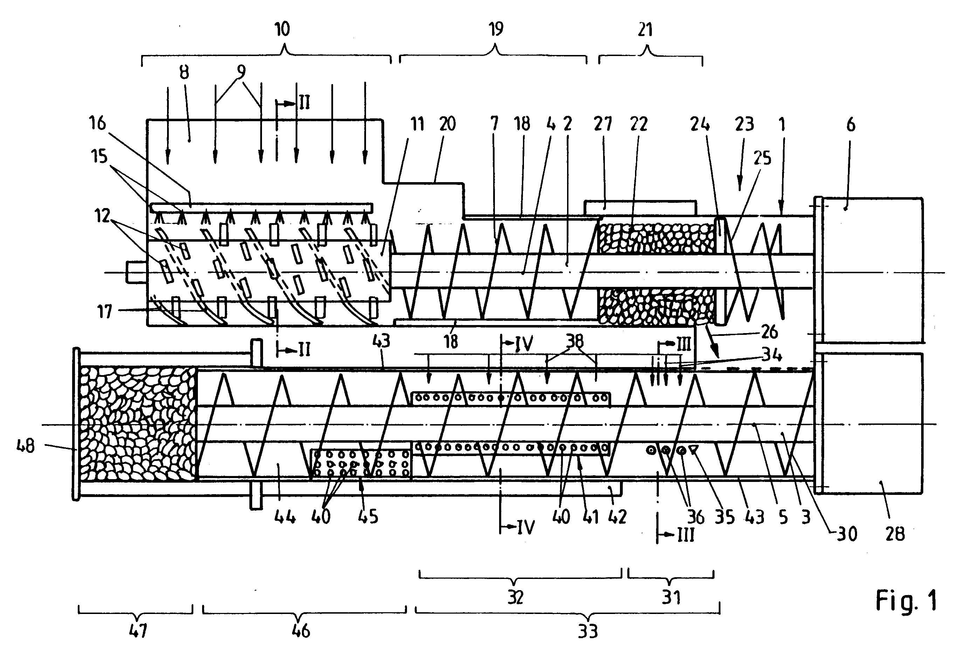

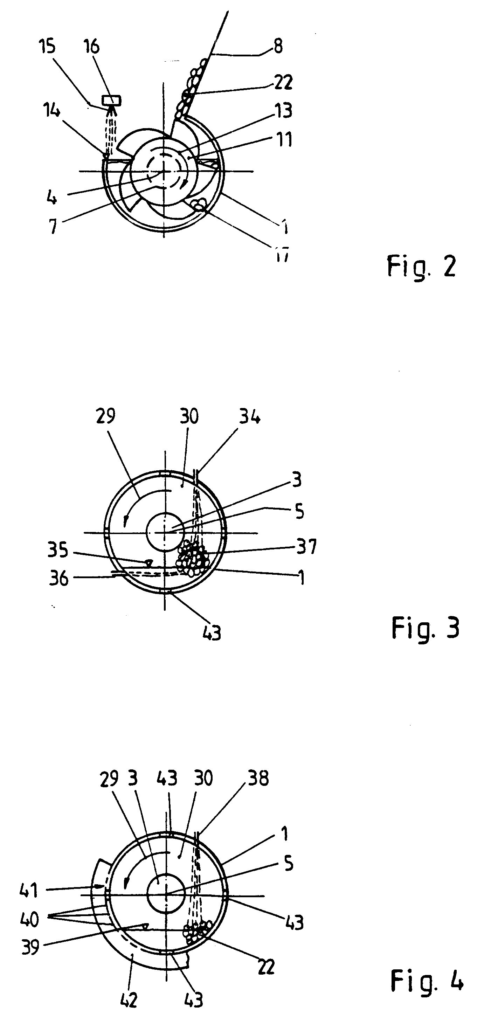

Bei der Vorrichtung gemäß Figur 1 ist ein nicht in allen Bereichen dargestelltes Gehäuse 1 vorgesehen, in dem übereinander zwei Wellen 2 und 3 mit horizontal angeordneten Achsen 4 und 5 angeordnet sind. Die Welle 2 wird von einem Motor 6 angetrieben. Sie ist auf einem Teil ihrer Länge mit einer Förderwendel 7 ausgestattet, wobei die Drehrichtung des Motors 6 so gewählt ist, daß eine Förderung von links nach rechts erfolgt. Das Gehäuse 1 beginnt mit einem Einwurftrichter 8, durch den das von einer anderen Vorrichtung abgeschiedene, verunreinigte Rechen- und Siebgut gemäß den Pfeilen 9 eingeworfen wird. Unterhalb des Einwurftrichters 8 und etwa über seine axiale Länge reichend ist eine Vorwaschzone 10 gebildet. Die Welle 2 besitzt durchgehend über die Vorwaschzone 10 einen verdickten Bereich 11. Auf diesem verdickten Bereich 11, also auf vergleichsweise größerem Radius beginnend, sind Misch- und Knetschaufeln 12 angeordnet, die abständig sowohl über den Umfang wie auch über die Länge des verdickten Bereichs 11 vorgesehen sind. Die Misch- und Knetschaufeln 12 können zusätzlich steigungsmäßig etwas angestellt sein, um zusätzlich auch eine gewisse Förderwirkung zu erbringen. Die Misch- und Knetschaufeln 12 besitzen eine besondere Formgebung, die aus Figur 2 ersichtlich ist. Sie sind, beginnend auf dem vergrößerten Durchmesser des verdickten Bereichs 11, entgegen der Drehrichtung 13 nach hinten gebogen, damit sich möglichst kein Rechen- oder Siebgut an ihnen festsetzen kann. Die Misch- und Knetschaufeln 12 beginnen auf dem verdickten Bereich 11 gleichsam in tangentialer Richtung und enden etwa auf einem Durchmesser, der auch dem Außendurchmesser der Förderwendel 7 entspricht. Die Misch- und Knetschaufeln 12 haben die Aufgabe, das verunreinigte Rechen- und Siebgut schonend umzuwälzen, gleichsam einen Einweichvorgang zu erbringen und bereits erste Fäkalienklumpen von dem Rechengut ab- und aufzubrechen. Eine Zerkleinerungswirkung auf das Rechengut soll nicht ausgeübt werden. Aus diesem Grund kann auch die Welle 2 vorteilhaft mit niedrigerer Drehzahl als die Welle 3 angetrieben werden. Der Einweichvorgang wird nicht in trockenem bzw. quasi trockenem Zustand des Rechenguts durchgeführt, sondern im Wasser, wobei der Wasserstand 14 (Figur 2) höheneinstellbar ausgebildet sein kann. Der Wasserstand sollte mindestens der halben Höhe des Querschnitts in der Vorwaschzone 10 entsprechen, also mindestens bis zur Achse 4 reichen. Waschwasser wird über eine Reihe von Waschdüsen 15, die entlang einer sich axial erstreckenden Leiste 16 angeordnet sein können, aufgebracht und ergänzt, wobei die Abfuhr des Waschwassers nicht dargestellt ist. Die Leiste 16 mit den Waschdüsen 15 ist so angeordnet (Figur 2), daß mit ihnen nicht nur das aus dem Wasserstand 14 herausschauende Rechengut, sondern auch die Misch- und Knetschaufeln 12 während ihrer Aufwärtsbewegung oberhalb des Wasserstands 14 erreicht werden. Damit wird eine Reinigungswirkung auf die Misch- und Knetschaufeln 12 ausgeübt, so daß trotz ihrer besonderen Formgebung noch anhaftendes Rechengut von den Misch- und Knetschaufeln 12 gelöst und in den Umwälzvorgang in der Vorwaschzone zurückgeführt wird. Bie diesem Umwälzvorgang findet bereits eine Zerkleinerung von Fäkalklumpen bis zu gewissem Grad statt. In dieser Vorwaschzone 10 ist - wenn auch in geringem Maße -, eine Axialförderung auf das Rechengut beabsichtigt. Hierzu sind im Bereich der Waschzone 10 auf der Innenwandung des Gehäuses 1 wendelförmig angeordnete Misch- und Förderleisten 17 vorgesehen. Figur 2 verdeutlicht, daß die Misch- und Knetschaufeln 12 in radialem Abstand vor den Misch- und Förderleisten 17 enden, damit auf jeden Fall eine Scherwirkung und damit eine Zerkleinerungswirkung auf das Rechengut vermieden wird. Es genügt die Drehbewegung, um eine Förderung des Rechenguts zu erreichen. Das Rechengut gelangt dann in einen Teil der Vorrichtung, in welchem die Welle 4 mit der Förderwendel 7 ausgestattet ist. In diesem Bereich sind an der Innenwandung des Gehäuses 1 über den Umfang verteilt Führungsleisten 18 angeordnet. Es ist hier ein Förderbereich 19 gebildet, der an die Vorwaschzone 10 anschließt. Im Übergangsbereich kann das Gehäuse eine Erweiterung 20 besitzen, die oben angeordnet ist, so daß entsprechend dem Wasserstand 14 große Rechengutstücke, z. B. Äste, die nicht weitertransportiert werden sollen und können, zurückgehalten werden.

Nachfolgend zum Förderbereich 19 ist eine erste Preßzone 21 vorgesehen, die auch als Vorpreßzone bezeichnet werden kann. Die Welle 2 ist hier förderwendelfrei ausgebildet, so daß sich das Rechengut 22 in der Preßzone 21 staut, hier den gesamten freien Querschnitt ausfüllt und damit gleichsam ein Pfropf gebildet wird, der zusammengedrückt wird, wodurch ein weiterer Walkvorgang auf das verunreinigte Rechengut ausgeübt wird. Auf dem dem Motor 6 zugekehrten Ende der Preßzone 21 trägt die Welle 2 eine Einrichtung 23 zum gezielten Aufbrechen des in der Preßzone 21 verdichteten Rechenguts 22. Die Einrichtung 23 weist eine Abscherleiste 24 auf, an die eine Wendel 25 anschließt, deren Umlaufrichtung entgegengesetzt zu der Förderwendel 7 ausgebildet ist. Die Wendel 25 kann auch mehrgängig gestaltet sein. Mit Hilfe der Abscherleiste 24 der Einrichtung 23 wird der Pfropf aus Rechengut 22, der sich in der Preßzone 21 gebildet hat, gezielt und mengenmäßig portioniert aufgeteilt, so daß diese Portionen verunreinigten Rechenguts gemäß Pfeil 26 gleichsam zeitlich getaktet in den Bereich der anderen Welle 3 überführt werden. Eine hier nicht näher dargestellte Durchlaßöffnung (Pfeil 26) kann mit einem einstellbaren Gehäusering 27 vergrößert bzw. verkleinert werden.

Die Welle 3 wird über einen Motor 28 angetrieben, wobei die Drehrichtung 29 (Figur 3) entgegengesetzt zur Drehrichtung 13 der Welle 2 gewählt ist. Die Welle 3 ist über ihre gesamte axiale Länge mit einer Förderwendel 30 besetzt. Es ist hier eine Waschzone 33 gebildet, die in einen ersten Bereich 31 und einen zweiten Bereich 32 unterteilt ist. Die Bereiche 31 und 32 können unmittelbar aneinander anschließen. Figur 3 zeigt den Schnitt durch den ersten Bereich 31. Figur 4 zeigt den Schnitt durch den zweiten Bereich 32.

Im ersten Bereich 31 sind Waschdüsen 34 oberhalb des Wasserstands 35 angeordnet. Unterhalb des Wasserstands 35 sind Waschdüsen 36 vorgesehen. Der Wasserstand 35 ist so eingestellt, daß er etwa einen Bereich von 1/4 bis 1/3 der Höhe des Querschnitts des Gehäuses an dieser Stelle einnimmt. Wie aus Figur 3 zu erkennen ist, wird das Rechengut im Wasser insbesondere durch die Einwirkung der Waschdüsen 36 in eine rotierende Bewegung versetzt, so daß sich gleichsam Walzen- oder Knäuelabschnitte bilden, die, sich fortwährend umwälzend, gemäß Pfeil 37 von dem Spritzwasser der Waschdüsen 34 erreicht werden. Hierdurch erfolgt ein weiteres Ablösen von Fäkalstoffen, ein Aufbrechen von Fäkalklumpen und eine Anreicherung der Fäkalstoffe im Wasser. Das Rechengut wird in diesem ersten Bereich 31 bereits deutlich sauberer. Das Gehäuse 1 ist in dem ersten Bereich 31 der Waschzone 33 geschlossen ausgebildet. Diese geschlossene Ausbildung erstreckt sich auch in Richtung auf den Motor 28 in die vorgeschaltete Förderzone hinein, wobei vorzugsweise in diesem Bereich kein Ablauf für das Wasser vorgesehen ist.

Im zweiten Bereich 32 der Waschzone 33 sind Waschdüsen 38, ähnlich den Waschdüsen 34, im Bereich 31 vorgesehen. Im Bereich 32 herrscht der Wasserstand 39, der bei der beschriebenen Ausführungsform im wesentlichen mit dem Wasserstand 35 im ersten Bereich 31 übereinstimmt. Der gemeinsame Wasserstand 35, 39 wird im wesentlichen von Durchbrechungen 40 eines Lochblechs 41 bestimmt, welches seitlich (Figur 4) am Gehäuse 1 vorgesehen ist bzw. die Wandung des Gehäuses 1 an dieser Stelle ersetzt. Im unteren Bereich ist das Gehäuse 1 geschlossen ausgebildet. Die Waschdüsen 38 sind in axialer Richtung mit größerem Abstand angeordnet als im ersten Bereich 31. Sie haben die Aufgabe, die bereits gelösten und zerkleinerten Fäkalstoffe großflächig auszuwaschen und von dem Rechengut losgelöst im Waschwaser zu verteilen, damit die Fäkalstoffe mit dem Waschwaser abgeführt werden können. Das Waschwasser tritt durch die Durchbrechungen 40 des Lochblechs 41 in eine mantelförmige Wanne 42 über, die etwa am Anfang des Bereichs 32 beginnt und sich nach links bis zum Ende der Vorrichtung erstreckt. Im gesamten Bereich der Welle 3 bzw. der Förderwendel 30 ist die Innenwandung des Gehäuses 1 mit Führungsleistungen 43 besetzt, die sich axial durchgehend erstrecken. Diese Führungsleisten 43 bilden zwischen dem freien Rand der Förderwendel 30 und der sonstigen Innenwand des Gehäuses 1 nicht nur Durchströmkanäle für das mit den Fäkalstoffen belastete Wasser, sondern sie stellen zugleich eine Gleitleiste für die Förderwendel 30 dar. Die Führungsleisten 43 sind lediglich im Bereich eines Lagers 44 für die Welle 3 unterbrochen.

An das Ende des Bereichs 32 der Waschzone 33 schließt sich ein weiteres Lochblech 45 an, welches ebenfalls Durchbrechungen 40 aufweist. Dieses Lochblech 45 ist am Grund, also unten angeordnet. Es dient dazu, das Wasser weitgehend abzuführen, damit das Rechengut in einer nachfolgenden Förderzone 46 gefördert und entwässert werden kann, bevor es in eine zweite Preßzone 47 eintritt. Die Preßzone 47 erstreckt sich über den gesamten Querschnitt, weil die Welle 3 und die Förderwendel 30 mit der Förderzone 46 enden. Das Gehäuse 1 weist im Bereich der Preßzone 47 weiterhin Durchbrechungen auf, so daß ausgepreßtes Wasser, mit Fäkalstoffen beladen, hier ebenfalls in der Wanne 42 aufgefangen wird, so daß es in den Klärkreislauf zurückgeführt werden kann. Im Bereich der Preßzone 47 kann eine hier nicht dargestellte Austragsöffnung für das gewaschene und gepreßte Rechengut vorgesehen sein. In diesem Fall dient ein Flansch 48 als Abschluß des Gehäuses 1. Es ist aber auch möglich, hier ein Steigrohr o. dgl. nachzuordnen, um den Auspreßvorgang zu intensivieren und zu verlängern und auf diese Art und Weise das gepreßte, gewaschene Rechengut aus der Vorrichtung herauszuleiten.

### Bezugszeichenliste:

- 1: = Gehäuse
- 2: = Welle
- 3: = Welle
- 4: = Achse
- 5: = Achse
- 6: = Motor
- 7: = Förderwendel
- 8: = Einwurftrichter
- 9: = Pfeil
- 10: = Vorwaschzone
- 11: = verdickter Bereich
- 12: = Misch- und Knetschaufel
- 13: = Drehrichtung
- 14: = Wasserstand
- 15: = Waschdüse
- 16: = Leiste
- 17: = Misch- und Förderleiste
- 18: = Führungsleiste
- 19: = Förderbereich
- 20: = Erweiterung
- 21: = Preßzone
- 22: = Rechengut
- 23: = Einrichtung
- 24: = Abscherleiste
- 25: = Wendel
- 26: = Pfeil
- 27: = Gehäusering
- 28: = Motor
- 29: = Drehrichtung
- 30: = Förderwendel
- 31: = erster Bereich
- 32: = zweiter Bereich
- 33: = Waschzone
- 34: = Waschdüse
- 35: = Wasserstand
- 36: = Waschdüse
- 37: = Pfeil
- 38: = Waschdüse
- 39: = Wasserstand
- 40: = Durchbrechung
- 41: = Lochblech
- 42: = Wanne
- 43: = Führungsleiste
- 44: = Lager
- 45: = Lochblech
- 46: = Förderzone
- 47: = Preßzone
- 48: = Flansch

## Patentansprüche

1. Vorrichtung zum Verdichten und Waschen von verunreinigtem Rechen- oder Siebgut, insbesondere in Kläranlagen, mit einer Schneckenfördereinrichtung, die ein Gehäuse (1) mit Einwurftrichter (8), eine darin horizontal gelagerte und mit einem Antrieb versehene Welle (2, 3) und eine auf der Welle angeordnete Förderwendel (7, 30) aufweist, mit einer Waschzone und darin angeordneten Waschdüsen (34, 36, 38) für die Zufuhr von Waschwasser sowie vor und nach der Waschzone angeordneten Preßzonen (21 ; 47), die förderwendelfrei ausgebildet sind, dadurch gekennzeichnet, daß die Waschzone (33) ist in zwei aneinander anschließende Bereiche (31, 32) unterteilt ist, in denen jeweils ein definierter Wasserstand (35, 39), der etwa 1/4 bis 1/3 der Höhe des Querschnitts des Gehäuses (1) einnimmt, herrscht, daß im ersten Bereich (31) der Waschzone (33) die Waschdüsen (34, 36) sowohl oberhalb des Wasserstands (35) als auch unterhalb angeordnet sind, und daß im zweiten Bereich (32) der Waschzone (33) das Gehäuse (1) der Schneckenfördereinrichtung mit seitlich angeordneten, den Wasserstand definierenden Durchbrechungen (40) versehen ist.

2. Vorrichtung nach Anspruch 1, dadurch gekennzeichnet, daß der Waschzone (33) eine Vorwaschzone (10) vorgeschaltet ist, in der die Welle (2) der Schneckenfördereinrichtung mit Misch- und Knetschaufeln (12) besetzt ist, und daß die Vorwaschzone (10) einen mindestens der halben Höhe des Querschnitts des Gehäuses (1) entsprechenden Wasserstand (14) aufweist.

3. Vorrichtung nach Anspruch 2, dadurch gekennzeichnet, daß die Vorwaschzone (10) vor der der Waschzone (33) vorgeschalteten Preßzone (21) vorgesehen und zumindest teilweise im Bereich des Einwurftrichters (8) angeordnet ist.

4. Vorrichtung nach Anspruch 2 oder 3, dadurch gekennzeichnet, daß in der Vorwaschzone (10) Waschdüsen (15) oberhalb des Wasserstands (14) vorgesehen sind.

5. Vorrichtung nach einem oder mehreren der Ansprüche 2 bis 4, dadurch gekennzeichnet, daß die Misch- und Knetschaufeln (12) auf einem im Durchmesser verdickten Bereich (11) der Welle (2) der Schneckenfördereinrichtung angeordnet sind und eine der Drehrichtung (13) entgegengesetzt abgebogene Formgebung aufweisen.

6. Vorrichtung nach Anspruch 1, dadurch gekennzeichnet, daß das Gehäuse (1) der Schneckenfördereinrichtung im ersten Bereich (31) der Waschzone (33) geschlossen ausgebildet ist.

7. Vorrichtung nach Anspruch 1 oder 6, dadurch gekennzeichnet, daß der zweite Bereich (32) der Waschzone (33) länger als der erste Bereich (31) ausgebildet ist.

8. Vorrichtung nach einem oder mehreren der Ansprüche 2 bis 7, dadurch gekennzeichnet, daß die Vorwaschzone (10) einerseits und die Waschzone (33) andererseits entlang zweier paralleler Wellen (2, 3) der Schneckenfördereinrichtung angeordnet sind.

9. Vorrichtung nach einem oder mehreren der Ansprüche 2 bis 8, dadurch gekennzeichnet, daß an der Innenwandung des Gehäuses (1) im Bereich der Vorwaschzone (10) wendelförmig angeordnete Misch- und Förderleisten (17) vorgesehen sind.

10. Vorrichtung nach einem oder mehreren der Ansprüche 1 bis 9, dadurch gekennzeichnet, daß vor der Waschzone (33) und nach der vorgeschalteten Preßzone (21) eine Einrichtung (23) zum gezielten Aufbrechen des in der Preßzone (21) verdichteten Rechenguts (22) vorgesehen ist.

## Claims

1. Device for compressing and washing contaminated raked-off or screened material, particulary in sewage treatment plants, with a screw conveyor device having a housing (1) with feed hopper (8), therein a shaft (2, 3) mounted horizontally on bearings and provided with a drive, and a conveyor helix (7, 30) arranged on the shaft, and with a washing zone and washer nozzles (34, 36, 38) arranged therein for the supply of wash water, as well as compacting zones (21, 47), constructed without conveyor helices, arranged both before and after the washing zone, **characterized in** that the washing zone (33) is divided into two sections (31, 32) adjacent each other, in each of which a defined water level (35, 39), occupying approximately ¼ to 1/3 of the height of the cross-section of the housing (1), prevails, that the washer nozzles (34, 36) are located both above and below the water level (35) in the first section of the washing zone (33), and that in the second section (32) of the washing zone (33), the housing for the screw conveyor device is provided with openings (40) arranged laterally to define the water level.

2. Device according to claim 1, **characterized in** that a prewash zone (10) is arranged upstream of the washing zone (33) and in said prewash zone the shaft (2) of the screw conveyor device is provided with mixing and kneading blades (12), and that the prewash zone (10) has a water level (14) corresponding to at least half the height of the housing (1) cross-section.

3. Device according to claim 2, **characterized in** that the prewash zone (10) is provided before the compacting zone (21) upstream of the washing zone (33) and is arranged at least partly in the area of the feed hopper (8).

4. Device according to claim 2 or 3, **characterized in** that washer nozzles (15) are provided above the water level (14) in the prewash zone (10).

5. Device according to one or more of the claims 2 to 4, **characterized in** that the mixing and kneading blades (12) are arranged on a part (11) of the shaft (2) for the screw conveyor device (7) which has an enlarged diameter, and wherein said mixing and kneading blades have a shape bent opposite to the direction of rotation (13) of said shaft.

6. Device according to claim 1, **characterized in** that the housing (1) for the screw conveyor device is built as a closed construction in the first section (31) of the washing zone (33).

7. Device according to claim 1 or 6, **characterized in** that the second section (32) of the washing zone (33) is built longer than the first section (31).

8. Device according to one or more of the claims 2 to 7, **characterized in** that the prewash zone (10) is arranged on one side and the washing zone (33) on the other side along two parallel shafts (2, 3) for the screw conveyor device.

9. Device according to one or more of the claims 2 to 8, **characterized in** that mixing and conveying blades (17) are provided and arranged in helical fashion on the inside wall of the housing (1) in the area of the prewash zone (10).

10. Device according to one or more of the claims 1 to 9, **characterized in** that a device (23) for systematically breaking up the raked-off material (23) compressed in the compacting zone (21) is provided before the washing zone (33) and after the upstream compacting zone (21).

## Revendications

1. Dispositif de compactage et de lavage de refus de grille ou de crible souillés, en particulier dans des stations d'épuration, avec un dispositif à vis sans fin, qui comporte un carter (1) avec trémie de chargement (8), un arbre (2, 3) monté horizontalement à l'intérieur et pourvu d'un entraînement, ainsi qu'une hélice de transport (7, 30) montée sur l'arbre, avec une zone de lavage et des buses de lavage (34, 36, 38) placées à l'intérieur pour l'arrivée d'eau de lavage ainsi que des zones de pression (21 ; 47) situées devant et derrière la zone de lavage, qui ne comportant pas d'hélice de transport, caractérisé en ce que la zone de lavage (33) est partagée en deux secteurs (31, 32) sa raccordant l'un à l'autre, dans chacun desquels règne un niveau d'eau (35, 39) défini, qui occupe environ 1/4 à 1/3 de la hauteur de la section transversale du carter (1), en ce que dans le premier secteur (31) de la zone de lavage (33) les buses de lavage (34, 36) sont situées au-dessus du niveau d'eau (35) ainsi qu'au-dessous, et en ce que dans la deuxième secteur (32) de la zone de lavage (33), le carter (1) du dispositif de transport à vis sans fin est pourvu d'ajours (40) situés latéralment, définissant le niveau d'eau.

2. Dispositif selon la revendication 1, caractérisé en ce qu'en amont de la zone de lavage (33) se trouve une zone de prélavage (10), dans laquelle l'arbre (2) du dispositif de transport à vis sans fin est doté de pales de mélange et de malaxage (12), et en ce que la zone de prélavage (10) présente un niveau d'eau (14) correspondant au moins à la moitié de la hauteur de la section transversale du carter (1).

3. Dispositif selon la revendication 2, caractérisé en ce que la zone de prélavage (10) est prévue en amont de la zone de pression (21), située en amont de la zone de lavage (33) et se trouve au moins en partie dans la région de la trémie de chargement (8).

4. Dispositif selon les revendications 2 ou 3, caractérisé an ce que dans la zone de prélavage (10) sont prévues des buses de lavage (15) au-dessus du niveau d'eau (14).

5. Dispositif selon une ou plusieurs des revendications 2 à 4, caractérisé en ce que las pales de mélange et de malaxage (12) sont placées sur une partie (11) de plus gros diamètre de l'arbre (2) du dispositif de transport à vis sans fin et présentant une forme cintrée opposée au sans de rotation (13).

6. Dispositif selon la revendication 1, caractérisé en ce que le carter (1) du dispositif de transport à vis sans fin est fermé dans le premier secteur (31) de la zone de lavage (33).

7. Dispositif selon les revendications 1 ou 6, caractérisé en ce que le deuxième secteur (32) de la zone de lavage (33) est plus long que le premier secteur (31).

8. Dispositif selon une au plusieurs des revendications 2 à 7, caractérisé en ce que la zone de prélavage (10) d'une part et la zone de lavage (33) d'autre part sont disposées le long de deux arbres (2, 3) parallèles du dispositif de transport à vis sans fin.

9. Dispositif selon une ou plusieurs des revendications 2 à 8, caractérisé en ce que sur la paroi intérieure du carter (1), des barres de mélange et de transport (17) disposées en hélice, sont prévues dans la région de la zone de prélavage (10).

10. Dispositif selon une ou plusieurs des revendications 1 à 9, caractérisé en ce que devant la zone de lavage (33) et après la zone de pression (21) située en amont, il est prévu un dispositif (23) destiné à briser de manière contrôlée le refus de grille (22) compacté dans la zone de pression (21).
